# EUROPEAN PATENT APPLICATION

(11) **EP 3 703 292 A1**
(43) Date of publication of application: **02.09.2020**
(21) Application number: 18884466.6
(22) Date of filing: 14.11.2018
(51) Int. Cl.: H04L 1/20, H04L 29/06

(54) **DATA PROCESSING METHOD AND CABLE MODEM TERMINAL SYSTEM**

(30) Priority: 30.11.2017 CN 201711240853
(71) Applicant: Huawei Technologies Co., Ltd., Longgang District Shenzhen, Guangdong 518129 (CN)
(72) Inventor: CHENG, Biao, Shenzhen Guangdong 518129 (CN); LIU, Hexian, Shenzhen Guangdong 518129 (CN); XU, Jin, Shenzhen Guangdong 518129 (CN); LI, Yong, Shenzhen Guangdong 518129 (CN)
(74) Representative: Maiwald Patent- und Rechtsanwaltsgesellschaft mbH
(86) International application number: PCT/CN2018/115414
(87) International publication number: WO 2019/105229

(57) **Abstract**

Embodiments of this application disclose a data processing method, to avoid a packet loss and improve user experience. The method in the embodiments includes: sending, by a cable modem termination system CMTS, a dynamic bonding change DBC request to a cable modem CM, where the DBC request is used to request the CM to change a modulation profile group corresponding to the downstream channel from a first profile group to a second profile group, the first profile group is a profile group currently supported by the CM, and at least one target profile in the second profile group is not in the first profile group; sending, by the CMTS, a first downstream data packet to the CM by using any profile in the first profile group, and sending a second downstream data packet to the CM by using the target profile, where the first downstream data packet is the same as the second downstream data packet; and sending, by the CMTS, a third downstream data packet to the CM by using any profile in the second profile group.

## Description

This application claims priority to Chinese Patent Application No. 201711240853.2, filed with the Chinese Patent Office on November 30, 2017 and entitled "DATA PROCESSING METHOD AND CABLE MODEM TERMINATION SYSTEM", which is incorporated herein by reference in its entirety.

### TECHNICAL FIELD

This application relates to the field of communications technologies, and in particular, to a data processing method and a cable modem termination system.

### BACKGROUND

Data over cable service interface specifications (Data Over Cable Service Interface Specifications, DOCSIS) is a standard that defines a hybrid fiber-coaxial (Hybrid Fiber-Coaxial, HFC) network. DOCSIS 3.1 introduces the concept of a downstream profile for an orthogonal frequency division multiplexing (Orthogonal Frequency Division Multiplexing, OFDM) channel. A profile (profile) defines a modulation scheme for each subcarrier on a downstream OFDM channel, and modulation schemes are broadcast to all CMs by using a downstream profile descriptor (Downstream Profile Descriptor, DPD) message. A CMTS may define a plurality of profiles for a used downstream OFDM channel, and each subcarrier may have different modulation schemes in different profiles. The CMTS may assign different profiles to CMs in different groups. With the different downstream OFDM profiles assigned to the CMs in the different groups, CMs with similar downstream channel quality can use an appropriate subcarrier modulation scheme, to improve anti-noise capabilities of downstream channels. Therefore, a same OFDM downstream channel can adapt to CMs with different channel quality.

In the standard, it is defined that the CMTS can support up to 16 downstream OFDM profiles, but a current CM supports a maximum of 4 profiles. Therefore, after calculation based on a downstream dynamic profile grouping algorithm, when the CMTS needs to change a downstream profile used by the CM, a dynamic bonding change (Dynamic Bonding Change, DBC) message needs to be used to instruct the CM to change the downstream OFDM profile.

In the prior art, when downstream dynamic profile switching needs to be performed, after the CMTS instructs, by using a DBC request, the CM to perform profile switching, the CMTS continues to use an old profile (a downstream OFDM profile previously assigned to the CM) to send a downstream packet. After receiving a DBC response sent by the CM, the CMTS uses a new profile to send a downstream packet to the CM, and sends a DBC acknowledgment message to the CM at the same time.

In the foregoing switching process, the CMTS uses the old profile to send the downstream packet until the CMTS receives the DBC response, but the CM uses the new profile to obtain the downstream packet after the CM performs configuration for the new profile. In this case, after the CM receives the DBC request and before the CMTS receives the DBC response, there is a short period of time when the CMTS uses the old profile to send a downstream packet and the CM uses the new profile to receive the downstream packet. Consequently, the CM cannot obtain the downstream packet sent by the CMTS, causing a packet loss and affecting a downstream service of a user.

### SUMMARY

Embodiments of this application provide a data processing method and a CMTS, to avoid a packet loss and improve user experience.

In view of this, a first aspect of this application provides a data processing method, and the method includes the following:
When determining that a CM needs to switch a modulation profile group corresponding to a downstream channel, a CMTS sends a DBC request to the CM. The DBC request is used to request the CM to change a modulation profile group corresponding to the downstream channel from a first profile group to a second profile group, the first profile group is a profile group currently supported by the CM, and at least one target profile in the second profile group is not in the first profile group.

After sending the DBC request, the CMTS sends two copies of same downstream data packets to the CM by using two different profiles. One of the profiles is a profile in the first profile group, and the other profile is the target profile. In this embodiment, the downstream data packet sent by using the profile in the first profile group is referred to as a first downstream data packet, and the downstream data packet sent by using the target profile is referred to as a second downstream data packet. The first downstream data packet is the same as the second downstream data packet.

A period of time after the CMTS sends the two copies of same downstream data packets to the CM by using the two different profiles, the CMTS sends a downstream data packet (a third downstream data packet) to the CM by using only one profile (any profile in the second profile group).

It should be understood that, a downstream profile defines a modulation scheme for each subcarrier on a downstream channel. A mode group in this embodiment is also referred to as a profile group, and a mode in this embodiment is also referred to as a profile.

With reference to the first aspect of this application, in a first implementation of the first aspect of this application, that a period of time after the CMTS sends the two copies of same downstream data packets to the CM by using the two different profiles, the CMTS sends a downstream data packet (a third downstream data packet) to the CM by using only one profile (any profile in the second profile group) may be specifically: after the CMTS receives a DBC response sent by the CM and sends a DBC acknowledgment message to the CM, the CMTS sends the downstream data packet (the third downstream data packet) to the CM by using only one profile (the any profile in the second profile group).

The DBC acknowledgment message is used to notify the CM that the CMTS already receives the DBC response.

In this embodiment, after sending the DBC acknowledgment message to the CM, the CMTS does not send data by using a profile in an old profile group, but sends data by using only a profile in a new profile group. Therefore, after the CM completes downstream profile group switching, the CMTS does not send data by using a profile in the old profile group, but sends data by using only a profile in the new profile group. This ensures that a packet loss does not occur in the process in which the CM changes the profile, and improves user experience.

With reference to the first aspect of this application or the first implementation of the first aspect, in a second implementation of the first aspect of this application, the CMTS may specifically send the two copies of same downstream data packets to the CM by using the two different profiles in the following manner:
The CMTS obtains a first data packet, and replicates the first data packet to obtain a second data packet. Then, the CMTS modulates the first data packet by using a modulation scheme corresponding to the any profile in the first profile group and modulates the second data packet by using a modulation scheme corresponding to the target profile, and sends two data packets obtained after the modulation, over the downstream channel.

This embodiment of this application provides a specific manner of sending two copies of same downstream data packets by using two different profiles. This improves implementability of the solution.

A second aspect of this application provides a data processing method, and the method includes the following:
When determining that a CM needs to switch an IUC group corresponding to an upstream channel, a CMTS sends a DBC request to the CM. The DBC request is used to request the CM to change an IUC group corresponding to the upstream channel from a first IUC group to a second IUC group, the first IUC group is an IUC group currently supported by the CM, and at least one target IUC in the second IUC group is not in the first IUC group.

After sending the DBC request, the CMTS allocates two bandwidths according to a bandwidth allocation request (a first upstream bandwidth allocation request) sent by the CM. One of the bandwidths is allocated by using an IUC in the first IUC group, and the other bandwidth is allocated by using the target IUC. Then, the CMTS sends two allocation results to the CM.

A period of time after the CMTS allocates the two bandwidths according to the bandwidth allocation request of the CM, when the CMTS receives a bandwidth allocation request (a second upstream bandwidth allocation request) sent by the CM, the CMTS allocates a bandwidth to the CM by using only an IUC in the second IUC group.

In this embodiment of this application, when determining that the CM needs to switch an upstream IUC group, the CMTS sends a DBC request to the CM. After sending the DBC request, the CMTS first allocates two bandwidths (namely, a first result and a second result) by using any IUC in an old IUC group and a target IUC (namely, an IUC included in a new IUC group but not included in the old IUC group) in the new IUC group. After a period of time, the CMTS allocates a bandwidth to the CM by using only an IUC in the new IUC group. In this embodiment, in a process in which the CM changes the IUC group, the CMTS may allocate bandwidths to the CM by using an IUC in the old IUC group and an IUC in the new IUC group. In this case, regardless of whether the switching is completed, the CM can send upstream data. This avoids a packet loss in the process in which the CM changes the IUC, and improves user experience.

With reference to the second aspect of this application, in a first implementation of the first aspect of this application, that a period of time after the CMTS allocates the two bandwidths according to the bandwidth allocation request of the CM, when the CMTS receives a bandwidth allocation request (a second upstream bandwidth allocation request) sent by the CM, the CMTS allocates a bandwidth to the CM by using only an IUC in the second IUC group is specifically: after the CMTS receives a DBC response sent by the CM and sends a DBC acknowledgment message to the CM, the CMTS allocates the bandwidth to the CM by using only the IUC in the second profile group.

The DBC acknowledgment message is used to notify the CM that the CMTS already receives the DBC response.

With reference to the second aspect of this application or the first implementation of the second aspect, in a second implementation of the second aspect of this application, the CMTS may send the two bandwidth allocation results to the CM in the following manner:
The CMTS generates two information elements (Information element, IE) for the two bandwidth allocation results (the first result and the second result), adds the two IEs to upstream bandwidth allocation mapping messages of a corresponding channel, and broadcasts the upstream bandwidth allocation mapping messages to all CMs.

This embodiment provides a specific manner of generating two allocation results by using different IUCs and sending the two allocation results to the CM. This improves implementability of the solution.

A third aspect of this application provides a data processing method, and the method includes the following:
When determining that a CM needs to switch a modulation profile group corresponding to a downstream channel, a CMTS sends a DBC request to the CM. The DBC request is used to request the CM to change a modulation profile group corresponding to the downstream channel from a first profile group to a second profile group. The first profile group is a profile group currently supported by the CM. The second profile group is different from the first profile group, but the second profile group and the first profile group both include a target profile.

After sending the DBC request, the CMTS sends a downstream data packet (a first downstream data packet) to the CM by using the target profile.

A period of time after the CMTS sends the downstream data packet to the CM by using the target profile, the CMTS may send a downstream data packet (a second downstream data packet) to the CM by using any profile in the second profile group.

It should be understood that a downstream profile defines a modulation scheme for each subcarrier on a downstream channel. A mode group in this embodiment is also referred to as a profile group, and a mode in this embodiment is also referred to as a profile.

In this embodiment of this application, when determining that the CM needs to switch a downstream profile group, the CMTS may retain at least one target profile in a profile group currently supported by the CM, and sends a DBC request to the CM. After sending the DBC request, the CMTS sends downstream data by using one of the at least one target profile. After sending a DBC acknowledgment message, the CMTS may send downstream data to the CM by using any profile in a new profile group of the CMTS. In this embodiment, the CMTS may retain the at least one target profile in the profile group currently supported by the CM, and send downstream data to the CM in a switching process by using the target profile. The CM retains the target profile in the process of changing the profile group. Therefore, whenever the CM completes changing the profile group, the CM can obtain the downstream data by using the target profile. This avoids a packet loss in the process in which the CM changes the profile group, and improves user experience.

With reference to the third aspect of this application, in a first implementation of the third aspect of this application, that a period of time after the CMTS sends the downstream data packet to the CM by using the target profile, the CMTS sends a downstream data packet to the CM by using any profile in a new profile group may be specifically: after the CMTS receives a DBC response sent by the CM and sends the DBC acknowledgment message to the CM, the CMTS sends a downstream data packet to the CM by using the any profile in the second profile group.

The DBC acknowledgment message is used to notify the CM that the CMTS already receives the DBC response.

A fourth aspect of this application provides a data processing method, and the method includes the following:
When determining that a CM needs to switch an IUC group corresponding to an upstream channel, a CMTS sends a DBC request to the CM. The DBC request is used to request the CM to change an IUC group corresponding to the upstream channel from a first IUC group to a second IUC group, the first IUC group is an IUC group currently supported by the CM, and the second IUC group and the second IUC group both include a target IUC.

After sending the DBC request, the CMTS allocates, according to a bandwidth allocation request (a first upstream bandwidth allocation request) sent by the CM, a bandwidth to the CM by using the target IUC, and sends an allocation result to the CM. A period of time after the CMTS allocates the bandwidth to the CM by using the target IUC, when the CMTS receives a bandwidth allocation request (a second upstream bandwidth allocation request) sent by the CM, the CMTS may allocate a bandwidth to the CM by using any IUC in the second IUC group.

With reference to the fourth aspect of this application, in a first implementation of the fourth aspect of this application, that a period of time after the CMTS allocates the bandwidth to the CM by using the target IUC, when the CMTS receives a bandwidth allocation request (a second upstream bandwidth allocation request) sent by the CM, the CMTS may allocate a bandwidth to the CM by using any IUC in the second IUC group is specifically: after the CMTS receives a DBC response sent by the CM and sends a DBC acknowledgment message to the CM, when the CMTS receives the bandwidth allocation request (the second upstream bandwidth allocation request) sent by the CM, the CMTS may allocate the bandwidth to the CM by using the any IUC in the second IUC group.

The DBC acknowledgment message is used to notify the CM that the CMTS already receives the DBC response.

A fifth aspect of this application provides a CMTS, and the CMTS includes a first sending unit, a second sending unit, and a third sending unit.

The first sending unit is configured to send a dynamic bonding change DBC request to a cable modem CM. The DBC request is used to request the CM to change a modulation profile group corresponding to the downstream channel from a first profile group to a second profile group, the first profile group is a profile group currently supported by the CM, and at least one target profile in the second profile group is not in the first profile group.

The second sending unit is configured to: send a first downstream data packet to the CM by using any profile in the first profile group, and send a second downstream data packet to the CM by using the target profile. The first downstream data packet is the same as the second downstream data packet.

The third sending unit is configured to send a third downstream data packet to the CM by using any profile in the second profile group.

With reference to the fifth aspect of this application, in a first implementation of the first aspect of this application, the CMTS further includes a receiving unit and a fourth sending unit.

The receiving unit is configured to receive a DBC response corresponding to the DBC request.

The fourth sending unit is configured to send a DBC acknowledgment message to the CM. The DBC acknowledgment message is used to notify the CM that the CMTS already receives the DBC response.

With reference to the fifth aspect of this application or the first implementation of the fifth aspect, in a second implementation of the fifth aspect of this application, the second sending unit includes a media access control MAC module and a physical layer PHY module.

The MAC module is configured to: obtain a first data packet, replicate the first data packet to obtain a second data packet, packetize the first data packet to obtain a first data frame, packetize the second data packet to obtain a second data frame, and send the first data frame and the second data frame to the PHY module.

The PHY module is configured to: modulate the first data packet by using a modulation scheme corresponding to the any profile in the first profile group, to obtain the first downstream data packet, modulate the second data packet by using a modulation scheme corresponding to the target profile, to obtain the second downstream data packet, and send the first downstream data packet and the second downstream data packet over the downstream channel.

A sixth aspect of this application provides a CMTS, and the CMTS includes a first sending unit, a first allocation unit, a second sending unit, and a second allocation unit. The first sending unit is configured to send a dynamic bonding change DBC request to a cable modem CM. The DBC request is used to request the CM to change an interval usage code IUC group corresponding to an upstream channel from a first IUC group to a second IUC group, the first IUC group is an IUC group currently supported by the CM, and at least one target IUC in the second IUC group is not in the first IUC group. The first allocation unit is configured to: when the CMTS receives a first upstream bandwidth allocation request sent by the CM, allocate an upstream bandwidth to the CM by using any IUC in the first IUC group, to obtain a first result, and allocate an upstream bandwidth to the CM by using the target IUC, to obtain a second result. The second sending unit is configured to send the first result and the second result to the CM.

The second allocation unit is configured to: when the CMTS receives a second upstream bandwidth allocation request sent by the CM, allocate an upstream bandwidth to the CM by using any IUC in the second IUC group.

With reference to the sixth aspect of this application, in a first implementation of the first aspect of this application, the CMTS further includes a receiving unit and a third sending unit.

The receiving unit is configured to receive a DBC response corresponding to the DBC request.

The third sending unit is configured to send a DBC acknowledgment message to the CM. The DBC acknowledgment message is used to notify the CM that the CMTS already receives the DBC response.

With reference to the sixth aspect of this application or the first implementation of the sixth aspect, in a second implementation of the sixth aspect of this application, the CMTS further includes a notification unit, the second allocation unit is the first allocation unit, and the first allocation unit includes a dynamic bandwidth allocation DBA module.

The notification unit is configured to: after the first sending unit sends the DBC request, instruct the DBA module to allocate bandwidths to the CM by using any IUC in the first IUC group and the target IUC; and after the third sending unit sends the DBC acknowledgment message, instruct the DBA module to allocate a bandwidth to the CM by using any IUC in the second IUC group.

With reference to the sixth aspect of this application, or the first implementation or the second implementation of the sixth aspect, in a third implementation of the sixth aspect of this application, the second sending unit includes a carrying module and a broadcasting module. The carrying module is configured to: add, to a first upstream bandwidth allocation mapping message, an information element IE corresponding to the first result, and add, to a second upstream bandwidth allocation mapping message, an IE corresponding to the second result. The broadcasting module is configured to broadcast the first upstream bandwidth allocation mapping message and the second upstream bandwidth allocation mapping message to the CM.

A seventh aspect of this application provides a CMTS, and the CMTS includes a first sending module, a second sending module, and a third sending module.

The first sending module is configured to send a DBC request to a CM. The DBC request is used to request the CM to change a modulation profile group corresponding to the downstream channel from a first profile group to a second profile group. The first profile group is a profile group currently supported by the CM. The second profile group is different from the first profile group, but the second profile group and the first profile group both include a target profile.

The second sending module is configured to send a first downstream data packet to the CM by using the target profile.

The third sending module is configured to send a second downstream data packet to the CM by using any profile in the second profile group.

With reference to the seventh aspect of this application, in a first implementation of the seventh aspect of this application, the CMTS further includes a receiving unit and a third sending unit.

The receiving unit is configured to receive a DBC response corresponding to the DBC request.

The third sending unit is configured to send a DBC acknowledgment message to the CM. The DBC acknowledgment message is used to notify the CM that the CMTS already receives the DBC response.

An eighth aspect of this application provides a CMTS, and the CMTS includes a first sending unit, a first allocation unit, a second sending unit, and a second allocation unit. The first sending unit is configured to send a DBC request to a CM. The DBC request is used to request the CM to change an IUC group corresponding to an upstream channel from a first IUC group to a second IUC group, the first IUC group is an IUC group currently supported by the CM, and at least one target IUC in the second IUC group is not in the first IUC group.

The first allocation unit is configured to: when a first upstream bandwidth allocation request sent by the CM is received, allocate two bandwidths. One of the bandwidths is allocated by using an IUC in the first IUC group, and the other bandwidth is allocated by using the target IUC.

The second sending unit is configured to send two results of the allocation performed by the first allocation unit to the CM.

The second allocation unit is configured to: when the CMTS receives a second upstream bandwidth allocation request sent by the CM, allocate a bandwidth to the CM by using any IUC in the second IUC group.

With reference to the eighth aspect of this application, in a first implementation of the eighth aspect of this application, the CMTS further includes a receiving unit and a third sending unit.

The receiving unit is configured to receive a DBC response corresponding to the DBC request.

The third sending unit is configured to send a DBC acknowledgment message to the CM. The DBC acknowledgment message is used to notify the CM that the CMTS already receives the DBC response.

A ninth aspect of this application provides a computer-readable storage medium. The computer-readable storage medium stores an instruction, and when the instruction is run on a computer, the computer is enabled to perform the methods according to the foregoing aspects.

A tenth aspect of this application provides a computer program product including an instruction. When the computer program product runs on a computer, the computer is enabled to perform the methods according to the foregoing aspects.

It can be learned from the foregoing technical solutions that, the embodiments of this application have the following advantages:
In the embodiments of this application, when determining that the CM needs to switch a downstream profile group, the CMTS sends a DBC request to the CM. After sending the DBC request, the CMTS first sends two copies of same downstream data (namely, a first downstream data packet and a second downstream data packet) by using any profile in an old profile group and a target profile (namely, a profile included in a new profile group but not included in the old profile group) in the new profile group. After a period of time, the CMTS sends downstream data to the CM by using only a target in the new profile group. In the embodiments, in a process in which the CM changes the profile group, the CMTS may send downstream data by using a profile in the old profile group and a profile in the new profile group. In this case, regardless of whether the switching is completed, the CM can obtain, through demodulation, the downstream data sent by the CMTS. This avoids a packet loss in the process in which the CM changes the profile, and improves user experience.

### BRIEF DESCRIPTION OF DRAWINGS

To describe the technical solutions in the embodiments of this application more clearly, the following briefly describes the accompanying drawings required for describing the embodiments. It is clear that the accompanying drawings in the following description show merely some embodiments of this application.
FIG. 1 is a schematic structural diagram of a data processing system according to this application;
FIG. 2 is a flowchart of an embodiment of a data processing method according to this application;
FIG. 3 is a flowchart of another embodiment of a data processing method according to this application;
FIG. 4 is a flowchart of still another embodiment of a data processing method according to this application;
FIG. 5 is a flowchart of yet another embodiment of a data processing method according to this application;
FIG. 6 is a flowchart of still yet another embodiment of a data processing method according to this application;
FIG. 7 is a flowchart of a further embodiment of a data processing method according to this application;
FIG. 8 is a flowchart of a still further embodiment of a data processing method according to this application;
FIG. 9 is a flowchart of a yet further embodiment of a data processing method according to this application;
FIG. 10 is a schematic diagram of an embodiment of a CMTS according to this application;
FIG. 11 is a schematic diagram of another embodiment of a CMTS according to this application;
FIG. 12 is a schematic diagram of still another embodiment of a CMTS according to this application; and
FIG. 13 is a schematic diagram of yet another embodiment of a CMTS according to this application.

### DESCRIPTION OF EMBODIMENTS

The following clearly and completely describes the technical solutions in the embodiments of this application with reference to the accompanying drawings in the embodiments of this application. It is clear that the described embodiments are merely some but not all of the embodiments of this application.

In the specification, claims, and accompanying drawings of this application, the terms "first", "second", "third", "fourth", and so on (if used) are intended to distinguish between similar objects but do not necessarily indicate a specific order or sequence. It should be understood that the data termed in such a way are interchangeable in proper circumstances, so that the embodiments of this application described herein can be implemented in orders except the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

The embodiments of this application provide a data processing method and a cable modem termination system, to avoid a packet loss and improve user experience.

For ease of understanding, the following describes a network system used for the data processing method and cable modem termination system in the embodiments of this application.

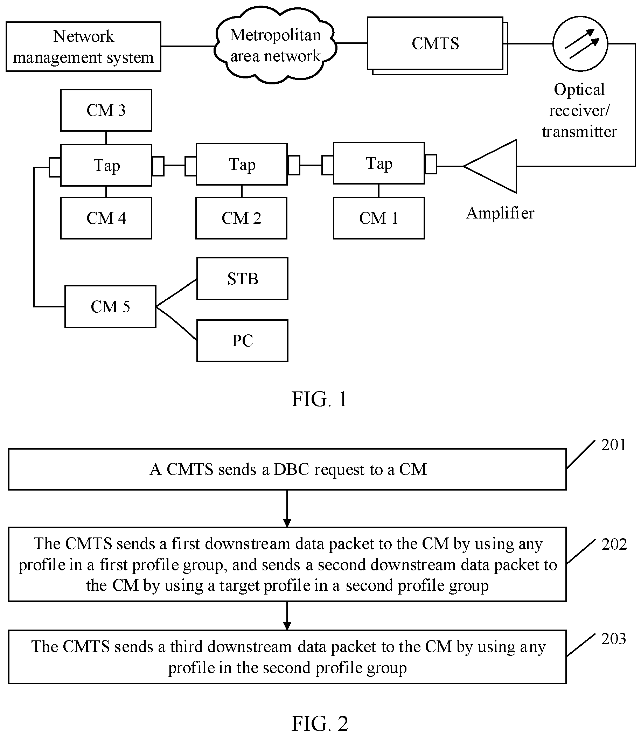

A hybrid fiber-coaxial (Hybrid Fiber-Coaxial, HFC) network technology is an economical and practical integrated digital service broadband network access technology. A HFC network generally includes three parts: an optical fiber trunk, a coaxial cable feeder, and a user distribution network. A program signal from a cable television station is first converted into an optical signal for transmission on the trunk. Then, after reaching a user area, the optical signal is converted into an electrical signal. Finally, after being distributed by a distributor, the electrical signal is sent to a user end through a coaxial cable. FIG. 1 shows a typical HFC network. As shown in FIG. 1, the HFC network may include the following devices and components: a network management system, a metropolitan area network, a coaxial cable central office access device (CMTS), an optical station, a CM, a set-top box (Set Top Box, STB) on a user side, a personal computer (Personal Computer, PC), an optical cable (fiber), a coaxial cable (cable), an amplifier, a tap (Tap), and the like. The components are not shown one by one in FIG. 1.

The CMTS is connected to the front-end metropolitan area network (internet). Other network devices such as a DHCP (Dynamic Host Configuration Protocol, DHCP) server and a trivial file transfer protocol (Trivial File Transfer Protocol, TFTP) server may also be connected to the metropolitan area network, but are not shown in the figure. The CMTS is a device that manages and controls the CM. Configuration for the CMTS may be completed by using a console (Console) interface or an Ethernet interface. The configuration for the CMTS mainly includes a downstream frequency, a downstream modulation scheme, a downstream level, and the like. The downstream frequency may be set to any value within a specified frequency range. However, to avoid interference to a signal on another channel, the downstream frequency should be selected from a specified frequency with reference to a cable television channel division table. The modulation scheme should be selected by considering channel transmission quality. In addition, an IP address of the DHCP server, an IP address of the TFTP server, an IP address of the CMTS, and the like further need to be set. After the setting is completed, if an intermediate line is not faulty and signal level attenuation satisfies a requirement, the DHCP server, the TFTP server, and the like are started, and a normal communication channel can be established between the front-end internet and the CM.

The CM is mainly used for data transmission on a cable television network. A modem is usually used to access the internet through a telephone line, while the CM is a device used to access the internet on the cable television network and is connected in series between a cable socket of a cable television and an internet access device in a user's home. The CM modulates upstream data to be uploaded by the user, and transfers upstream data obtained after the modulation to the internet and the like; the CM demodulates downstream data sent by the internet and the like, and transmits downstream data obtained after the demodulation to the internet access device.

In this application, "upstream" of a CM refers to a side close to the CMTS with the CM as a boundary. Likewise, "downstream" of the CM refers to a side away from the CMTS with the CM as the boundary.

In this application, "upstream" is sometimes used to represent an input port side of a direction-selective apparatus provided in this application, and "downstream" is sometimes used to represent an output port side of the direction-selective apparatus. In this application, an "upstream signal" is a signal sent by the CM to the CMTS, and the upstream signal is generally a low-frequency signal. For example, a frequency of the upstream signal may be less than 100 MHz (unit: M). Correspondingly, a "downstream signal" is a signal sent by the CMTS to the CM, and the downstream signal is generally a high-frequency signal. Because frequency bands for the upstream signal and the downstream signal are different, the upstream signal and the downstream signal may be transmitted over a same transmission medium.

In addition to the HFC network system shown in FIG. 1, another system may be used in this application. This is not specifically limited herein.

The following describes a data processing method in this application. Referring to FIG. 2, a data processing method in an embodiment of this application includes the following steps.

201: A CMTS sends a DBC request to a CM.

After the CM is initialized, the CM applies to the CMTS for registration by using configuration parameters. After receiving a registration response sent by the CMTS, the CM enters a normal working state. After entering the normal working state, the CM maintains communication with the CMTS. When the CMTS determines that because current communication quality of a downstream channel between the CMTS and the CM is relatively poor or because of another reason, modulation profiles which are corresponding to the downstream channel and currently supported by the CM (namely, a profile (profile) for which the CM is currently configured) needs to be changed, the CMTS sends the DBC request to the CM. The DBC request is used to request the CM to change a modulation profile group corresponding to the downstream channel from a first profile group to a second profile group. The first profile group is a profile group currently supported by the CM. In the second profile group, there is at least one target profile that is not in the first profile group. In other words, the target profile in this embodiment is a profile included in the second profile group but not included in the first profile group.

202: The CMTS sends a first downstream data packet to the CM by using any profile in the first profile group, and sends a second downstream data packet to the CM by using the target profile in the second profile group.

The CMTS sends the first downstream data packet to the CM by selecting any profile from the first profile group, and sends the second downstream data packet by using the target profile in the second profile group. The first downstream data packet is the same as the second downstream data packet. In other words, the two same data packets are sent by using a profile in a new profile group and a profile in an old profile group.

203: The CMTS sends a third downstream data packet to the CM by using any profile in the second profile group.

After sending the first downstream data packet and the second downstream data packet, the CMTS sends the third downstream data packet to the CM by using the any profile in the second profile group.

In this embodiment of this application, when determining that the CM needs to switch a downstream profile group, the CMTS sends a DBC request to the CM. After sending the DBC request, the CMTS first sends two copies of same downstream data (namely, the first downstream data packet and the second downstream data packet) by using any profile in the old profile group and a target profile (namely, a profile included in the new profile group but not included in the old profile group) in the new profile group. After a period of time, the CMTS sends downstream data to the CM by using only a profile in the new profile group. In this embodiment, in a process in which the CM changes the profile group, the CMTS may send downstream data by using a profile in the old profile group and a profile in the new profile group. In this case, regardless of whether the switching is completed, the CM can obtain, through demodulation, the downstream data sent by the CMTS. This avoids a packet loss in the process in which the CM changes the profile, and improves user experience.

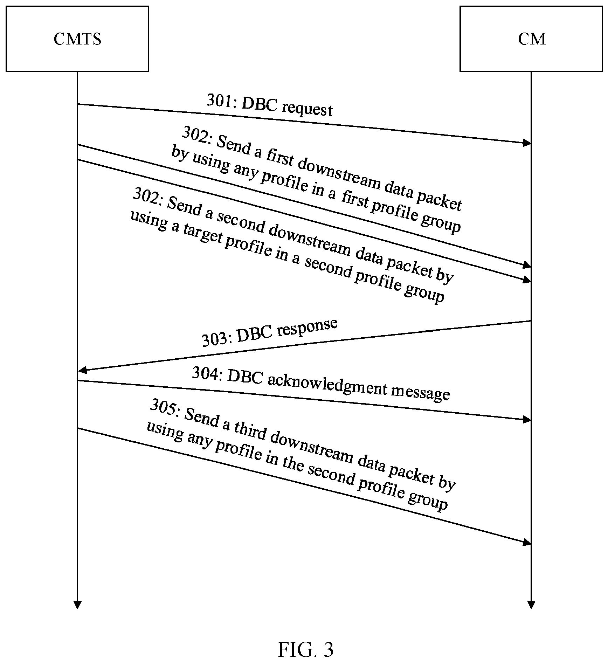

It should be understood that, in the embodiment corresponding to FIG. 2, after the CMTS sends the first downstream data packet to the CM by using the any profile in the first profile group and sends the second downstream data packet to the CM by using the target profile in the second profile group, when a preset trigger condition is satisfied, the CMTS sends data by using only a profile in the second profile group. Based on different trigger conditions that are set, moments at which the CMTS sends the data by using only the profile in the second profile group are different. The following describes in detail the data processing method in the embodiments of the present invention by using one trigger condition as an example. Referring to FIG. 3, a data processing method in another embodiment of this application includes the following steps.

301: A CMTS sends a DBC request to a CM.

After the CM is initialized, the CM applies to the CMTS for registration by using configuration parameters. After receiving a registration response sent by the CMTS, the CM enters a normal working state. After entering the normal working state, the CM maintains communication with the CMTS. When the CMTS determines that because current communication quality of a downstream channel between the CMTS and the CM is relatively poor or because of another reason, modulation profiles which are corresponding to the downstream channel and currently supported by the CM (namely, a profile (profile) group for which the CM is currently configured) needs to be changed, the CMTS sends the DBC request to the CM. The DBC request is used to request the CM to change a modulation profile group corresponding to the downstream channel from a first profile group to a second profile group. The first profile group is a profile group currently supported by the CM. In the second profile group, there is at least one target profile that is not in the first profile group. In other words, the target profile in this embodiment is a profile included in the second profile group but not included in the first profile group.

302: The CMTS sends a first downstream data packet to the CM by using any profile in the first profile group, and sends a second downstream data packet to the CM by using the target profile in the second profile group.

The CMTS sends the first downstream data packet to the CM by selecting any profile from the first profile group, and sends the second downstream data packet by using the target profile in the second profile group. The first downstream data packet is the same as the second downstream data packet. In other words, the two same data packets are sent by using a profile in a new profile group and a profile in an old profile group. Specifically, the CMTS obtains a first data packet from a network side, and replicates the first data packet to obtain a second data packet. Then, the CMTS modulates the first data packet by using a modulation scheme corresponding to the any profile in the first profile group, to obtain the first downstream data packet, and modulates the second data packet by using a modulation scheme corresponding to the target profile, to obtain the second downstream data packet. The CMTS sends the first downstream data packet and the second downstream data packet over the downstream channel. The first data packet may be specifically data that needs to be fed back by a server to a user terminal, or data that is broadcast by a server to user terminals, or other data. This is not specifically limited herein.

More specifically, in this embodiment, the CMTS includes a media access control (Media Access Control Layer, MAC) module and a physical layer (Physical Layer, PHY) module. After the CMTS obtains the first data packet, the MAC module replicates the data packet to obtain the second data packet, separately packetizes the first data packet and the second data packet into MAC frames, and sends the MAC frames to the PHY module, and the CMTS instructs the PHY module to modulate the two data packets by using the two modulation schemes. The PHY module modulates, by using the modulation scheme corresponding to the profile in the first profile group, the first data packet (the second data packet) that is packetized into a MAC frame and modulates, by using the modulation scheme corresponding to the target profile in the second profile group, the second data packet (the first data packet) packetized into a MAC frame, and sends two data packets obtained after the modulation, over the downstream channel. For ease of description, in this embodiment, the data packet obtained after the modulation by using the modulation scheme corresponding to the profile in the first profile group is referred to as the first downstream data packet, and data packet obtained after the modulation by using the modulation scheme corresponding to the target profile in the second profile group is referred to as the second downstream data packet.

It should be noted that, in this embodiment, the PHY module and the MAC module may support one entry or two entries, and the PHY module supports modulation of two same data packets.

It should be understood that, in addition to the foregoing manner, the CMTS may alternatively send the first downstream data packet and the second downstream data packet in another manner by using the profile in the first profile group and the target profile in the second profile group. This is not specifically limited herein.

It should be understood that, in this embodiment, if there are a plurality of target profiles, the CM may select one target profile from the plurality of target profiles to send the second downstream data packet to the CM.

303: The CMTS receives a DBC response corresponding to the DBC request.

After receiving the DBC request sent by the CMTS, the CM changes a downstream profile according to the DBC request. In other words, the CM changes a modulation profile group corresponding to the downstream channel from a first profile group to a second profile group. In this process, the CM sends the DBC response to the CMTS, and the CMTS receives the DBC response.

Specifically, if a profile currently supported by the CM is not in the second profile group, the CM deletes all currently supported profiles, and performs configuration for each profile in the second profile group; if a profile currently supported by the CM is in the second profile group, the CM retains a profile in both the second profile group and the currently supported profile group, deletes a profile in the currently supported profile group but not in the second profile group, and performs configuration for each target profile.

304: The CMTS sends a DBC acknowledgment message to the CM.

After receiving the DBC response, the CMTS sends the DBC acknowledgment message to the CM. The DBC acknowledgment message is used to notify the CM that the CMTS already receives the DBC response. Therefore, the CM does not repeatedly send the DBC response to the CMTS.

305: The CMTS sends a third downstream data packet to the CM by using any profile in the second profile group.

The CMTS may send a downstream data packet (namely, the third downstream data packet) to the CM by using only one profile (any profile selected from the second profile group), immediately after the CMTS sends the DBC acknowledgment message to the CM. Alternatively, the CMTS may send a downstream data packet to the CM by using only one profile (any profile selected from the second profile group), a period of time (preset duration) after the DBC acknowledgment message is sent.

In this embodiment of this application, when determining that the CM needs to switch a downstream profile group, the CMTS sends a DBC request to the CM. After sending the DBC request, the CMTS first sends two copies of same downstream data (namely, the first downstream data packet and the second downstream data packet) by using any profile in the old profile group and a target profile (namely, a profile included in the new profile group but not included in the old profile group) in the new profile group. After a period of time, the CMTS sends downstream data to the CM by using only a target profile in the new profile group. In this embodiment, in a process in which the CM changes the profile group, the CMTS may send downstream data by using a profile in the old profile group and a profile in the new profile group. In this case, regardless of whether the switching is completed, the CM can obtain, through demodulation, the downstream data sent by the CMTS. This avoids a packet loss in the process in which the CM changes the profile, and improves user experience.

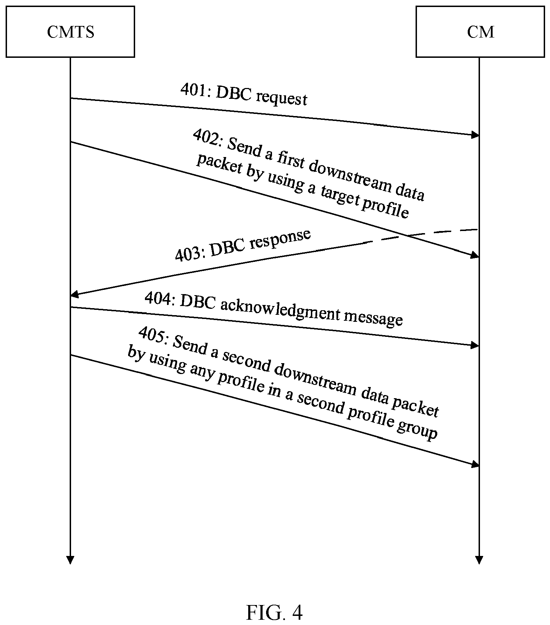

In addition, in this embodiment of the present invention, after sending a DBC acknowledgment message to the CM, the CMTS does not send data by using a profile in the old profile group, but sends data by using only a profile in the new profile group. Therefore, after the CM completes downstream profile group switching, the CMTS does not send data by using a profile in the old profile group, but sends data by using only a profile in the new profile group. This ensures that a packet loss does not occur in the process in which the CM changes the profile, and improves user experience. Referring to FIG. 4, a data processing method in still another embodiment of the present invention includes the following steps.

401: A CMTS sends a DBC request to a CM.

After the CM is initialized, the CM applies to the CMTS for registration by using configuration parameters. After receiving a registration response sent by the CMTS, the CM enters a normal working state. After entering the normal working state, the CM maintains communication with the CMTS. When the CMTS determines that because current communication quality of a downstream channel between the CMTS and the CM is relatively poor or because of another reason, modulation profiles which are corresponding to the downstream channel and currently supported by the CM (namely, a profile (profile) group for which the CM is currently configured) needs to be changed, the CMTS sends the DBC request to the CM. The DBC request is used to request the CM to change a modulation profile group corresponding to the downstream channel from a first profile group to a second profile group. The first profile group is a profile group currently supported by the CM. The second profile group is different from the first profile group, but the first profile group and the second profile group both include a target profile. In other words, the target profile in this embodiment is a profile included in both the second profile group and the second profile group.

To be specific, in this embodiment of the present invention, when the CMTS determines that because the current communication quality of the downstream channel between the CMTS and the CM is relatively poor or because of the another reason, the modulation profiles which are corresponding to the downstream channel and currently supported by the CM (namely, the profile (profile) group for which the CM is currently configured) needs to be changed, the CMTS retains, based on the profile group currently supported by the CM, at least one target profile in the profile group.

402: The CMTS sends a first downstream data packet to the CM by using the target profile.

After sending the DBC request to the CM, the CMTS sends a downstream data packet to the CM by using the target profile. For ease of understanding, in this embodiment, the downstream data packet sent by the CMTS by using the target profile is referred to as the first downstream data packet.

It should be understood that, in this embodiment, the first profile group and the second profile group may include a plurality of same profiles. In other words, there may be a plurality of target profiles. In this case, the CMTS may select any target profile to send the downstream data packet to the CM.

403: The CMTS receives a DBC response corresponding to the DBC request.

After receiving the DBC request sent by the CMTS, the CM changes a downstream profile according to the DBC request. In other words, the CM changes a modulation profile group corresponding to the downstream channel from a first profile group to a second profile group. In this process, the CM sends the DBC response to the CMTS, and the CMTS receives the DBC response.

Specifically, the CM retains the profiles in both the currently supported profile group and the second profile group (namely, all the target profiles), deletes another profile in the current profile group except the target profiles, and performs configuration for another profile in the second profile group except the target profiles.

404: The CMTS sends a DBC acknowledgment message to the CM.

After receiving the DBC response, the CMTS sends the DBC acknowledgment message to the CM. The DBC acknowledgment message is used to notify the CM that the CMTS already receives the DBC response. Therefore, the CM does not repeatedly send the DBC response to the CMTS.

405: The CMTS sends a second downstream data packet to the CM by using any profile in the second profile group.

The CMTS may send a downstream data packet to the CM by selecting any profile from the second profile group, immediately after the CMTS sends the DBC acknowledgment message to the CM. Alternatively, the CMTS may send a downstream data packet to the CM by selecting any profile from the second profile group, a period of time (preset duration) after the DBC acknowledgment message is sent.

In this embodiment of this application, when determining that the CM needs to switch a downstream profile group, the CMTS may retain at least one target profile in a profile group currently supported by the CM, and sends a DBC request to the CM. After sending the DBC request, the CMTS sends downstream data by using one of the at least one target profile. After sending a DBC acknowledgment message, the CMTS may send downstream data to the CM by using any profile in a new profile group of the CMTS. In this embodiment, the CMTS may retain the at least one target profile in the profile group currently supported by the CM, and send downstream data to the CM in a switching process by using the target profile. The CM retains the target profile in the process of changing the profile group. Therefore, whenever the CM completes changing the profile group, the CM can obtain the downstream data by using the target profile. This avoids a packet loss in the process in which the CM changes the profile group, and improves user experience.

To facilitate understanding the data processing method in the embodiments of this application, the following uses an actual application scenario as an example for description.

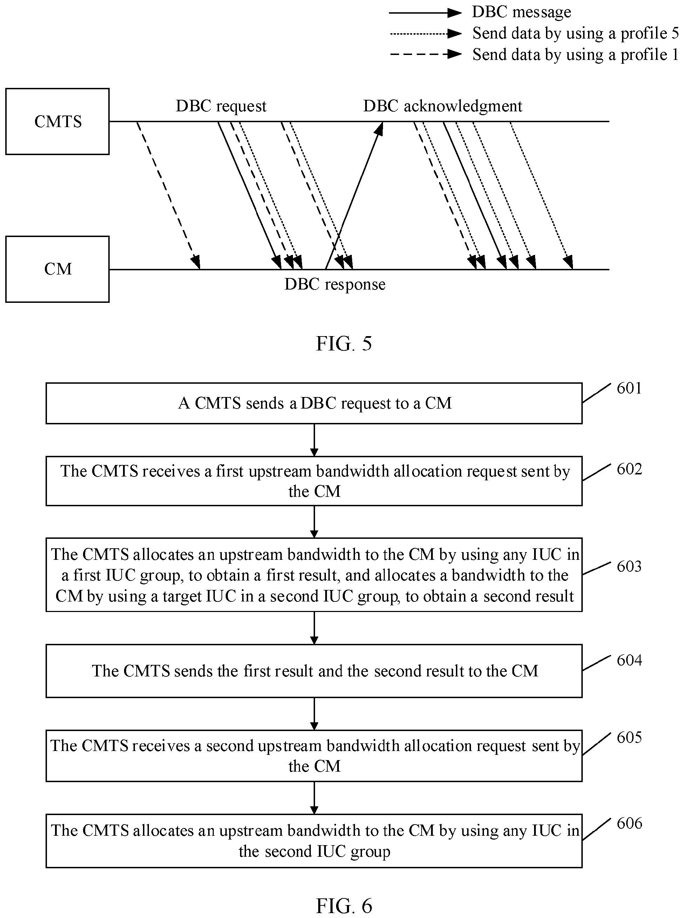

As shown in FIG. 5, a CM currently supports profiles 1, 2, 3, and 4 (a first profile group). During data transmission, a CMTS actually sends a downstream data packet to the CM by using the profile 1. The CMTS determines, based on current channel quality, that none of the profiles 1, 2, 3, and 4 supported by the CM is suitable for transmitting a downstream data packet and the CMTS needs to send a downstream data packet to the CM by using a profile 5. Because the CM can support four profiles, the CMTS sends a DBC request to the CM, to instruct the CM to change currently supported profiles from 1, 2, 3, and 4 to 5 (a target profile), 6 (a target profile), 7 (a target profile), and 8 (a target profile).

After sending the DBC request to the CM, the CMTS obtains a first data packet from a network side. A MAC module in the CMTS replicates the first downstream data packet to obtain a second data packet and packetizes the two packets into MAC frames and transmits the MAC frames to a PHY module, and the CMTS instructs the PHY module to perform signal modulation on the two data packets by using two profiles. After obtaining the two data packets from the MAC module, the PHY module modulates one of the data packets by using a modulation scheme corresponding to the profile 1 and modulates the other data packet by using a modulation scheme corresponding to the profile 5 (the target profile), and sends two data packets (a first downstream data packet and a second downstream data packet) obtained after the modulation, over a downstream channel.

After receiving the DBC request sent by the CMTS, the CM feeds back a DBC response to the CMTS, deletes parameters corresponding to the profiles 1, 2, 3, and 4, and configures parameters corresponding to the profiles 5, 6, 7, and 8.

After receiving the DBC response fed back by the CM, the CMTS returns a DBC acknowledgment message to the CM.

After receiving the DBC acknowledgment message sent by the CMTS, the CM determines that CMTS already receives the DBC response, and the CM does not repeatedly send the DBC response to the CMTS.

After the CMTS sends the acknowledgment message to the CM, the MAC module stops replicating a data packet obtained from the network side, and directly transfers the data packet obtained from the network side to the PHY module. The PHY module modulates the transferred data packet by using only the modulation scheme corresponding to the profile 5, and sends a data packet obtained after the modulation, over the downstream channel.

In the foregoing process, before completing configuration for the profile 5, the CM may obtain a downstream data packet by using the modulation scheme corresponding to the profile 1, and after completing the configuration for the profile 5, the CM may obtain a downstream data packet by using the modulation scheme corresponding to the profile 5. This avoids a packet loss during switching.

Because an HFC network is a point-to-multipoint network, when CMs send upstream signals, all the CMs share an upstream channel. Therefore, to prevent collision between the upstream signals of the CMs, upstream bandwidth allocation needs to be performed. The upstream channel is divided into different segments in frequency and time, and one segment allows only one CM to send an upstream signal. In specific implementation, generally, the CMTS periodically allocates upstream bandwidths according to requests of the CMs, combines allocation results into an upstream bandwidth allocation mapping (MAP) message, and broadcasts the upstream bandwidth allocation mapping message to all the CMs in a downstream direction. The CM parses the MAP message, and selects a slot that belongs to the CM, to send the upstream signal. The MAP message is used to specify an upstream signal sent by each CM in a time interval corresponding to a specific slot.

DOCSIS 3.1 introduces an upstream orthogonal frequency division multiple access (Orthogonal Frequency Division Multiple Access, OFDMA) channel. On the OFDMA channel, the CM may send upstream packets by using a plurality of data interval usage codes (Interval Usage Code, IUC). Each IUC defines a modulation scheme for each subcarrier on an entire upstream spectrum. The CM may select different IUCs (which is equivalent to selecting different upstream modulation schemes) to adapt to channels with different quality, to send upstream packets. The CMTS specifies a specific IUC used by the CM to send an upstream packet. The CMTS controls, by using a DBC message, an IUC list used by the CM for upstream.

When an IUC group used for an upstream channel of the CM needs to be switched, the CMTS needs to modify an IUC list of the CM by using a DBC message. Specifically, when the IUC group used for the upstream channel of the CM needs to be switched, after the CMTS instructs, by using a DBC request, the CM to switch the IUC group, the CMTS continues to use old IUC (an IUC previously assigned to the CM for use) to allocate a bandwidth to the CM. After receiving a DBC response sent by the CM, the CMTS sends a DBC acknowledgment message to the CM, and uses a new IUC obtained after the switching to allocate a bandwidth to the CM.

In the foregoing switching process, the CMTS uses, before receiving the DBC response, the old IUC to allocate a bandwidth, and the CM uses, after the CM performs configuration for the new IUC, the new IUC to send an upstream packet. In this case, after the CM receives the DBC request and before the CMTS receives the DBC response, there is a short period of time when the CMTS uses the old IUC to allocate a downstream bandwidth to the CM and the CM uses the new IUC to send an upstream packet. Consequently, the CM cannot send the upstream packet, causing a packet loss and affecting user experience.

In view of this, this application further provides a data processing method, to resolve the problem. Referring to FIG. 6, a data processing method in an embodiment of this application includes the following steps.

601: A CMTS sends a DBC request to a CM.

After the CM is initialized, the CM applies to the CMTS for registration by using configuration parameters. After receiving a registration response sent by the CMTS, the CM enters a normal working state. After the CM enters the normal working state, when the CMTS receives a bandwidth allocation request sent by the CM, the CMTS allocates a bandwidth to the CM by using an IUC in an IUC group currently supported by the CM.

When determining, based on upstream channel quality or another factor, that the IUC group currently supported by the CM needs to be adjusted, the CMTS sends the DBC request to the CM. The DBC request is used to request the CM to change an IUC group corresponding to an upstream channel from a first IUC group to a second IUC group. The first IUC group is the IUC group currently supported by the CM, and at least one target IUC in the second IUC group is not in the first IUC group. In other words, the target IUC in this embodiment is an IUC included in the second IUC group but not included in the first IUC group.

602: The CMTS receives a first upstream bandwidth allocation request sent by the CM. When the CM needs to send upstream data, the CM sends a bandwidth allocation request to the CMTS. After the CMTS sends the DBC request to the CM, when the CMTS receives the bandwidth allocation request (the first upstream bandwidth allocation request) sent by the CM, the CMTS performs step 603.

603: The CMTS allocates an upstream bandwidth to the CM by using any IUC in the first IUC group, to obtain a first result, and allocates an upstream bandwidth to the CM by using the target IUC in the second IUC group, to obtain a second result.

When receiving the first upstream bandwidth allocation request, the CMTS allocates two bandwidths to the CM. One of the bandwidths is allocated by using the any IUC in the first IUC group, and the other bandwidth is allocated by using the target IUC. In this embodiment, a result of the allocation performed by using the any IUC in the first IUC group is referred to as the first result, and a result of the allocation performed by using the target IUC is referred to as the second result.

604. The CMTS sends the first result and the second result to the CM.

After allocating the two bandwidths to the CM by using the two different IUCs, the CMTS sends the results corresponding to the two bandwidths to the CM. In other words, the CMTS sends the first result and the second result to the CM. Therefore, the CM can send upstream data in a corresponding slot by using the IUC in the first IUC group or send upstream data in a corresponding slot by using the target IUC in the second IUC group.

605: The CMTS receives a second upstream bandwidth allocation request sent by the CM.

A period of time after the CMTS allocates the two bandwidths to the CM by using the two IUCs, when receiving a bandwidth allocation request (the second upstream bandwidth allocation request) sent by the CM, the CMTS performs the following step 606.

606: The CMTS allocates an upstream bandwidth to the CM by using any IUC in the second IUC group.

When receiving the second upstream bandwidth allocation request sent by the CM, the CMTS allocates an upstream bandwidth to the CM by selecting any IUC from the second IUC group. The IUC may be or may not be a target IUC. This is not specifically limited herein.

Further, after allocating the upstream bandwidth to the CM, the CMTS may send an allocation result to the CM. This enables the CM to send upstream data in a corresponding interval by using the IUC in the second IUC group.

In this embodiment of this application, when determining that the CM needs to switch an upstream IUC group, the CMTS sends a DBC request to the CM. After sending the DBC request, the CMTS first allocates two bandwidths (namely, the first result and the second result) by using any IUC in an old IUC group and a target IUC (namely, an IUC included in the new IUC group but not included in the old IUC group) in the new IUC group. After a period of time, the CMTS allocates a bandwidth to the CM by using only an IUC in the new IUC group. In this embodiment, in a process in which the CM changes the IUC group, the CMTS may allocate bandwidths to the CM by using an IUC in the old IUC group and an IUC in the new IUC group. In this case, regardless of whether the switching is completed, the CM can send upstream data. This avoids a packet loss in the process in which the CM changes the IUC, and improves user experience.

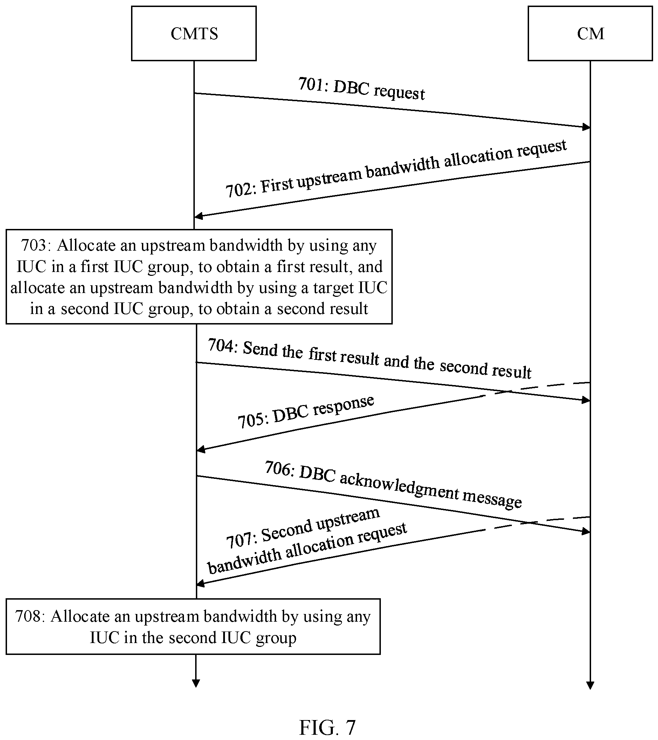

It should be understood that, in the embodiment corresponding to FIG. 6, after the CMTS allocates the two bandwidths to the CM by using the two different IUCs, when a preset trigger condition is satisfied, the CMTS allocates a bandwidth to the CM by using only an IUC in the second IUC group. Based on different trigger conditions that are set, moments at which the CMTS sends allocates the bandwidth to the CM by using only the IUC in the second IUC group are different. The following describes in detail the data processing method in the embodiments of the present invention by using one trigger condition as an example. Referring to FIG. 7, a data processing method in another embodiment of this application includes the following steps.

701: A CMTS sends a DBC request to a CM.

After the CM is initialized, the CM applies to the CMTS for registration by using configuration parameters. After receiving a registration response sent by the CMTS, the CM enters a normal working state. After the CM enters the normal working state, when the CMTS receives a bandwidth allocation request sent by the CM, the CMTS allocates a bandwidth to the CM by using an IUC in an IUC group currently supported by the CM.

When determining, based on upstream channel quality or another factor, that the IUC group currently supported by the CM needs to be adjusted, the CMTS sends the DBC request to the CM. The DBC request is used to request the CM to change an IUC group corresponding to an upstream channel from a first IUC group to a second IUC group. The first IUC group is the IUC group currently supported by the CM, and at least one target IUC in the second IUC group is not in the first IUC group. In other words, the target IUC in this embodiment is an IUC included in the second IUC group but not included in the first IUC group.

In this embodiment, after sending the DBC request to the CM, the CMTS may further instruct a dynamic bandwidth allocation (Dynamic Bandwidth Allocation, DBA) module to allocate bandwidths by using any IUC in the first IUC group and the target IUC.

702: The CMTS receives a first upstream bandwidth allocation request sent by the CM. When the CM needs to send upstream data, the CM sends a bandwidth allocation request to the CMTS. After the CMTS sends the DBC request to the CM, when the CMTS receives the bandwidth allocation request (the first upstream bandwidth allocation request) sent by the CM, the CMTS performs step 703.

703: The CMTS allocates an upstream bandwidth to the CM by using any IUC in the first IUC group, to obtain a first result, and allocates an upstream bandwidth to the CM by using the target IUC in the second IUC group, to obtain a second result.

When the CMTS receives the first upstream bandwidth allocation request sent by the CM, the DBA module in the CMTS allocates the two bandwidths to the CM by using the two different IUCs. One of the bandwidths is allocated by using the any IUC in the first IUC group, and the other bandwidth is allocated by using the target IUC. In this embodiment, a result of the allocation performed by using the any IUC in the first IUC group is referred to as the first result, and a result of the allocation performed by using the target IUC is referred to as the second result.

704. The CMTS sends the first result and the second result to the CM.

After allocating the two bandwidths to the CM by using the two different IUCs, the CMTS sends the allocation results corresponding to the two different IUCs to the CM. Therefore, the CM can send upstream data in a corresponding interval by using the IUC in the first IUC group or send upstream data in a corresponding interval by using the target IUC in the second IUC group.

Specifically, the CMTS adds, to a first upstream bandwidth allocation mapping message, an IE corresponding to the first result and adds, to a upstream bandwidth allocation mapping message, an IE corresponding to the second result, and broadcasts the first upstream bandwidth allocation mapping message and the second upstream bandwidth allocation mapping message to all CMs in a downstream direction. Therefore, the CM can parse the first upstream bandwidth allocation mapping message and send the upstream data in the corresponding interval by using the IUC in the first IUC group, or parse the second upstream bandwidth allocation mapping message and send the upstream data in the corresponding interval by using the target IUC in the second IUC group. The first upstream bandwidth allocation mapping message and the second upstream bandwidth allocation mapping message may be the same or different. This is not specifically limited herein.

705: The CMTS receives a DBC response corresponding to the DBC request.

After receiving the DBC request sent by the CMTS, the CM changes the IUC group corresponding to the upstream channel from the first IUC group to the second IUC group according to the DBC request. In this process, the CM sends the DBC response to the CMTS, and the CMTS receives the DBC response.

Specifically, if an IUC currently supported by the CM is not in the second IUC group, the CM deletes all currently supported IUCs, and performs configuration for each IUC in the second IUC group; if an IUC currently supported by the CM is in the second IUC group, the CM retains an IUC in both the second IUC group and the currently supported IUC group, deletes an IUC in the currently supported IUC group but not in the second IUC group, and performs configuration for each target IUC.

706: The CMTS sends a DBC acknowledgment message to the CM.

After receiving the DBC response, the CMTS sends the DBC acknowledgment message to the CM. The DBC acknowledgment message is used to notify the CM that the CMTS already receives the DBC response. Therefore, the CM does not repeatedly send the DBC response to the CMTS.

707: The CMTS receives a second upstream bandwidth allocation request sent by the CM.

The CMTS may instruct the DBA module to allocate an upstream bandwidth to the CM by using only an IUC in the second IUC group, immediately after the CMTS sends the DBC acknowledgment message to the CM. Alternatively, the CMTS may instruct the DBA module to allocate an upstream bandwidth to the CM by using only an IUC in the second IUC group, a period of time (preset duration) after the DBC acknowledgment message is sent. After the DBA module is notified, when the CMTS receives a bandwidth allocation request (the second upstream bandwidth allocation request) sent by the CM, the CMTS performs the following step 708.

708: The CMTS allocates an upstream bandwidth to the CM by using any IUC in the second IUC group.

When the CMTS receives the second upstream bandwidth allocation request sent by the CM, the DBA module in the CMTS allocates the upstream bandwidth to the CM by selecting the any IUC from the second IUC group. The IUC may be or may not be a target IUC. This is not specifically limited herein. Further, after allocating the upstream bandwidth to the CM, the CMTS may add, to an upstream bandwidth allocation mapping message, an IE corresponding to an allocation result, and broadcast the upstream bandwidth allocation mapping message to all the CMs. Therefore, the CM can send, after the CM parses the upstream bandwidth allocation mapping message, upstream data in a corresponding interval by using the IUC in the second IUC group. In this embodiment of this application, when determining that the CM needs to switch an upstream IUC group, the CMTS sends a DBC request to the CM. After sending the DBC request, the CMTS first allocates two bandwidths (namely, the first result and the second result) by using any IUC in an old IUC group and a target IUC (namely, an IUC included in a new IUC group but not included in the old IUC group) in the new IUC group. After a period of time, the CMTS allocates a bandwidth to the CM by using only an IUC in the new IUC group. In this embodiment, in a process in which the CM changes the IUC group, the CMTS may allocate bandwidths to the CM by using an IUC in the old IUC group and an IUC in the new IUC group. In this case, regardless of whether the switching is completed, the CM can send upstream data. This avoids a packet loss in the process in which the CM changes the IUC, and improves user experience.

In addition, in this embodiment of the present invention, after sending a DBC acknowledgment message to the CM, the CMTS does not allocate a bandwidth by using an IUC in the old IUC group, but allocates a bandwidth by using only an IUC in the new IUC group. Therefore, after the CM completes IUC group switching, the CMTS does not allocate a bandwidth by using an IUC in the old IUC group, but allocates a bandwidth by using only an IUC in the new IUC group. This ensures that a packet loss does not occur in the process in which the CM changes the IUC group, and improves user experience.

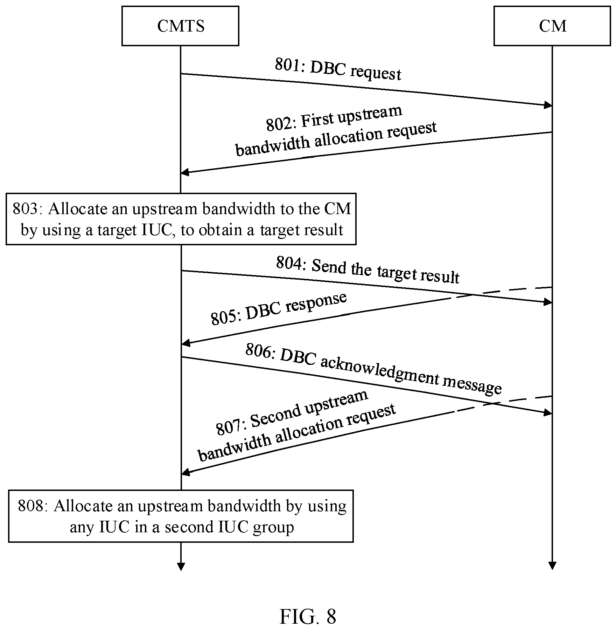

Referring to FIG. 8, a data processing method in still another embodiment of the present invention includes the following steps.

801. A CMTS sends a DBC request to a CM, where a first IUC group and a second IUC group both include a target IUC.

After the CM is initialized, the CM applies to the CMTS for registration by using configuration parameters. After receiving a registration response sent by the CMTS, the CM enters a normal working state. After the CM enters the normal working state, when the CMTS receives a bandwidth allocation request sent by the CM, the CMTS allocates a bandwidth to the CM by using an IUC in an IUC group currently supported by the CM.

When determining, based on upstream channel quality or another factor, that the IUC group currently supported by the CM needs to be adjusted, the CMTS sends the DBC request to the CM. The DBC request is used to request the CM to change an IUC group corresponding to an upstream channel from the first IUC group to the second IUC group. The first IUC group is the IUC group currently supported by the CM. The second IUC group is different from the first IUC group, but the first IUC group and the second IUC group both include the target IUC. In other words, the target IUC in this embodiment is an IUC included in both the second IUC group and the second IUC group.

To be specific, in this embodiment of the present invention, when the CMTS determines that because current communication quality of the upstream channel between the CMTS and the CM is relatively poor or because of another reason, the IUC group currently supported by the CM needs to be changed, the CMTS retains, based on the IUC group currently supported by the CM, at least one target IUC in the IUC group.

802: The CMTS receives a first upstream bandwidth allocation request sent by the CM. When the CM needs to send upstream data, the CM sends a bandwidth allocation request to the CMTS. After the CMTS sends the DBC request to the CM, when the CMTS receives the bandwidth allocation request (the first upstream bandwidth allocation request) sent by the CM, the CMTS performs step 803.

803: The CMTS allocates an upstream bandwidth to the CM by using the target IUC, to obtain a target result.

When the CMTS receives the first upstream bandwidth allocation request sent by the CM, a DBA module in the CMTS allocates the bandwidth to the CM by using the target IUC. In this embodiment, a result of the allocation performed by using the target IUC is referred to as the target second result.

804: The CMTS sends the target result to the CM.

The CMTS adds, to a corresponding upstream bandwidth allocation mapping message, an IE corresponding to the result (the target result) of the allocation performed by using the target IUC, and broadcasts the upstream bandwidth allocation mapping message to all CMs in a downstream direction. Therefore, the CM can parse the upstream bandwidth allocation mapping message and send upstream data in a corresponding interval by using the target IUC.

805: The CMTS receives a DBC response corresponding to the DBC request.

After receiving the DBC request sent by the CMTS, the CM changes the IUC group corresponding to the upstream channel from the first IUC group to the second IUC group according to the DBC request. In this process, the CM sends the DBC response to the CMTS, and the CMTS receives the DBC response.

Specifically, the CM retains an IUC in both the currently supported IUC group and the second IUC group (namely, the target IUC), deletes another IUC in the currently supported IUC group except the target IUC, and performs configuration for another IUC in the second IUC group except the target IUC.

806: The CMTS sends a DBC acknowledgment message to the CM.

After receiving the DBC response, the CMTS sends the DBC acknowledgment message to the CM. The DBC acknowledgment message is used to notify the CM that the CMTS already receives the DBC response. Therefore, the CM does not repeatedly send the DBC response to the CMTS.

807: The CMTS receives a second upstream bandwidth allocation request sent by the CM.

The CMTS may instruct the DBA module to allocate an upstream bandwidth to the CM by using any IUC in the second IUC group, immediately after the CMTS sends the DBC acknowledgment message to the CM. Alternatively, the CMTS may instruct the DBA module to allocate an upstream bandwidth to the CM by using any IUC in the second IUC group, a period of time (preset duration) after the DBC acknowledgment message is sent. After the DBA module is notified, when the CMTS receives a bandwidth allocation request (the second upstream bandwidth allocation request) sent by the CM, the CMTS performs the following step 808.

808: The CMTS allocates an upstream bandwidth to the CM by using any IUC in the second IUC group.

When the CMTS receives the second upstream bandwidth allocation request sent by the CM, the DBA module in the CMTS allocates the upstream bandwidth to the CM by selecting the any IUC from the second IUC group. The IUC may be or may not be a target IUC. This is not specifically limited herein. Further, after allocating the upstream bandwidth to the CM, the CMTS may add, to an upstream bandwidth allocation mapping message, an IE corresponding to an allocation result, and broadcast the upstream bandwidth allocation mapping message to all the CMs. Therefore, the CM can send, after the CM parses the upstream bandwidth allocation mapping message, upstream data in a corresponding interval by using the IUC in the second IUC group. In this embodiment of this application, when determining that the CM needs to switch an upstream IUC group, the CMTS may retain the at least one target IUC in an IUC group currently supported by the CM, and sends a DBC request to the CM. After sending the DBC request, the CMTS allocates a bandwidth by using the target IUC. After sending a DBC acknowledgment message, the CMTS may allocate a bandwidth to the CM by using any IUC in the second IUC group of the CMTS. In this embodiment, the CMTS may retain the at least one target IUC in the IUC group currently supported by the CM, and allocate a bandwidth to the CM in a switching process by using the target IUC. The CM retains the target IUC in the process of changing the IUC group. Therefore, whenever the CM completes changing the IUC group, the CM can send upstream data in a corresponding interval by using the target IUC. This avoids a packet loss in the process in which the CM changes the IUC group, and improves user experience.

To facilitate understanding the data processing method in the embodiments of this application, the following uses an actual application scenario as an example for description.

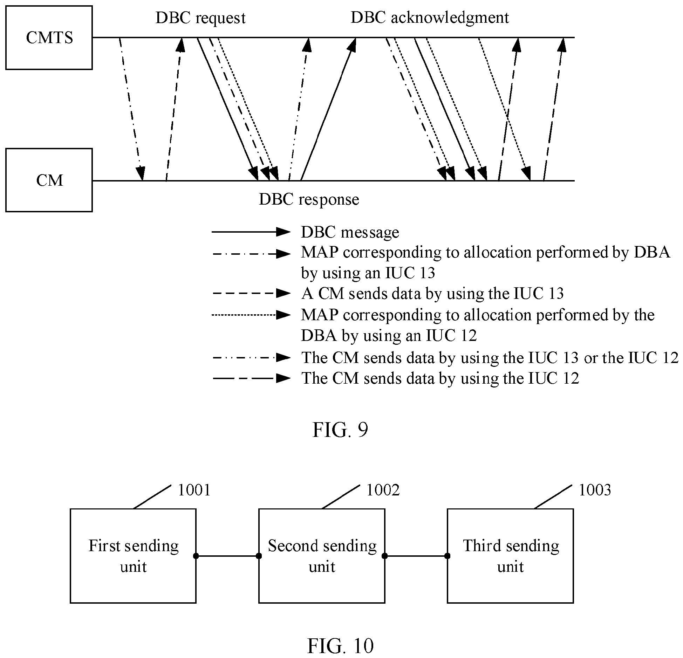

As shown in FIG. 9, a CM currently supports an IUC 13 and an IUC 14 (a first IUC group). During data transmission, when the CM needs to send upstream data, a CMTS allocates an upstream bandwidth to the CM according to a bandwidth allocation request of the CM by using the IUC 13.

The CMTS determines, based on current upstream channel quality, that neither the IUC 13 nor the IUC 14 supported by the CM is suitable for transmitting upstream data, and the CM needs to send upstream data to the CMTS by using an IUC 12. Because the CM can support two IUCs, the CMTS sends a DBC request to the CM, to instruct the CM to replace the currently supported IUC 13 and IUC 14 (the first IUC group) with an IUC 11 and the IUC 12 (a second IUC group).

After sending the DBC request to the CM, the CMTS instructs a DBA module to allocate bandwidths to the CM by using the IUC 13 and the IUC 12.

After the DBA module is notified, the DBA module receives a bandwidth allocation request (a first bandwidth allocation request) of the CM. The DBA module allocates a bandwidth to the CM by using the IUC 13, and allocates a bandwidth to the CM by using the IUC 12.

The CMTS adds, to a first upstream bandwidth allocation mapping message, an IE corresponding to a result of the allocation performed by using the IUC 13, and adds, to a second upstream bandwidth allocation mapping message, an IE corresponding to a result of the allocation performed by using the IUC 12. Then, the CMTS broadcasts the first upstream bandwidth allocation mapping message and the second upstream bandwidth allocation mapping message to all CMs.

After receiving the DBC request sent by the CMTS, the CM feeds back a DBC response to the CMTS, deletes parameters corresponding to the IUC 13 and IUC 14, and configures parameters corresponding to the IUC 11 and IUC 12.

After receiving the DBC response fed back by the CM, the CMTS returns a DBC acknowledgment message to the CM, and instructs the DBA module to allocate a bandwidth to the CM by using only the IUC 12.

After the DBA module is notified, the DBA module receives a bandwidth allocation request (a second bandwidth allocation request) of the CM. The DBA module allocates a bandwidth to the CM by using the IUC 12; adds, to an upstream bandwidth allocation mapping message, an IE corresponding to an allocation result; and broadcasts the upstream bandwidth allocation mapping message to all the CMs.

In the foregoing process, before the CM completes configuring the parameters corresponding to the IUC 12, the CM may parse the first upstream bandwidth allocation mapping message, and send upstream data in a corresponding interval by using the IUC 13. After the CM completes configuring the parameters corresponding to the IUC 12, the CM may parse the second upstream bandwidth allocation mapping message, and send upstream data in a corresponding interval by using the IUC 12. This avoids a packet loss during switching.

The foregoing describes the data processing methods in the embodiments of this application. The following describes CMTSs in the embodiments of this application. Referring to FIG. 10, a CMTS in an embodiment of this application includes:
a first sending unit 1001, configured to send a dynamic bonding change DBC request to a cable modem CM, where the DBC request is used to request the CM to change a modulation profile group corresponding to the downstream channel from a first profile group to a second profile group, the first profile group is a profile group currently supported by the CM, and at least one target profile in the second profile group is not in the first profile group;
a second sending unit 1002, configured to: send a first downstream data packet to the CM by using any profile in the first profile group, and send a second downstream data packet to the CM by using the target profile, where the first downstream data packet is the same as the second downstream data packet; and
a third sending unit 1003, configured to send a third downstream data packet to the CM by using any profile in the second profile group.

It should be understood that, a procedure performed by the modules in the CMTS corresponding to FIG. 10 is similar to the method procedure described in the embodiment shown in FIG. 2. Details are not described herein.

In this embodiment of this application, when the CMTS determines that the CM needs to switch a downstream profile group, the first sending unit 1001 sends a DBC request to the CM. After the first sending unit 1001 sends the DBC request, the second sending unit 1002 sends two copies of same downstream data (namely, the first downstream data packet and the second downstream data packet) by using any profile in an old profile group and a target profile (namely, a profile included in a new profile group but not included in the old profile group) in the new profile group. After a period of time, the third sending unit 1003 sends downstream data to the CM by using a target in the new profile group. In this embodiment, in a process in which the CM changes the profile group, the CMTS may send downstream data by using a profile in the old profile group and a profile in the new profile group. In this case, regardless of whether the switching is completed, the CM can obtain, through demodulation, the downstream data sent by the CMTS. This avoids a packet loss in the process in which the CM changes the profiles, and improves user experience.

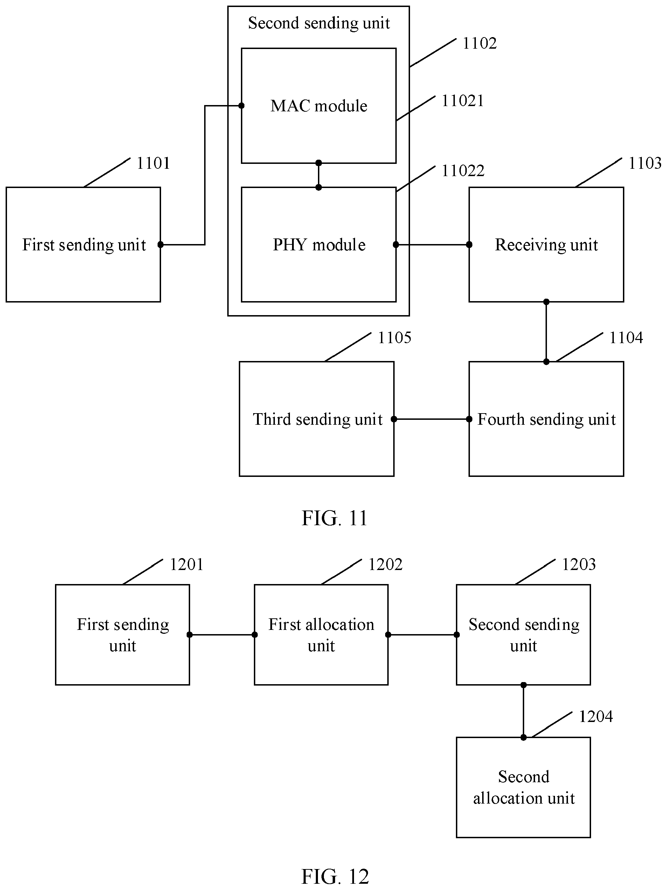

For ease of understanding, the following describes the CMTS in the embodiments of this application in detail. Referring to FIG. 11, a CMTS in another embodiment of this application includes:
a first sending unit 1101, configured to send a dynamic bonding change DBC request to a cable modem CM, where the DBC request is used to request the CM to change a modulation profile group corresponding to the downstream channel from a first profile group to a second profile group p, the first profile group is a profile group currently supported by the CM, and at least one target profile in the second profile group is not in the first profile group;
a second sending unit 1102, configured to: send a first downstream data packet to the CM by using any profile in the first profile group, and send a second downstream data packet to the CM by using the target profile, where the first downstream data packet is the same as the second downstream data packet;
a receiving unit 1103, configured to receive a DBC response corresponding to the DBC request;
a fourth sending unit 1104, configured to send a DBC acknowledgment message to the CM, where the DBC acknowledgment message is used to notify the CM that the CMTS already receives the DBC response; and a third sending unit 1105, configured to send a third downstream data packet to the CM by using any profile in the second profile group.

Optionally, in this embodiment, the second sending unit 1102 may include a MAC module 11021 and a PHY module 11022.

The MAC module 11021 is configured to: obtain a first data packet, replicate the first data packet to obtain a second data packet, packetize the first data packet to obtain a first data frame, packetize the second data packet to obtain a second data frame, and send the first data frame and the second data frame to the PHY module.

The PHY module 11022 is configured to: modulate the first data packet by using a modulation scheme corresponding to the any profile in the first profile group, to obtain the first downstream data packet, modulate the second data packet by using a modulation scheme corresponding to the target profile, to obtain the second downstream data packet, and send the first downstream data packet and the second downstream data packet over the downstream channel.

It should be understood that, a procedure performed by the modules in the CMTS corresponding to FIG. 11 is similar to the method procedure described in the embodiment shown in FIG. 3. Details are not described herein.

In this embodiment of this application, when the CMTS determines that the CM needs to switch a downstream profile group, the first sending unit 1101 sends a DBC request to the CM. After the first sending unit 1101 sends the DBC request, the second sending unit 1102 sends two copies of same downstream data (namely, the first downstream data packet and the second downstream data packet) by using any profile in an old profile group and a target profile (namely, a profile included in a new profile group but not included in the old profile group) in the new profile group. After a period of time, the third sending unit 1103 sends downstream data to the CM by using only a target in the new profile group. In this embodiment, in a process in which the CM changes the profile group, the CMTS may send downstream data by using a profile in the old profile group and a profile in the new profile group. In this case, regardless of whether the switching is completed, the CM can obtain, through demodulation, the downstream data sent by the CMTS. This avoids a packet loss in the process in which the CM changes the profiles, and improves user experience.

In addition, in this embodiment of the present invention, after sending a DBC acknowledgment message to the CM, the CMTS does not send data by using a profile in the old profile group, but sends data by using only a profile in the new profile group. Therefore, after the CM completes downstream profile group switching, the CMTS does not send data by using a profile in the old profile group, but sends data by using only a profile in the new profile group. This ensures that a packet loss does not occur in the process in which the CM changes the profiles, and improves user experience. An embodiment of this application further provides another CMTS. Referring to FIG. 12, a CMTS in an embodiment of this application includes:
a first sending unit 1201, configured to send a dynamic bonding change DBC request to a cable modem CM, where the DBC request is used to request the CM to change an interval usage code IUC group corresponding to an upstream channel from a first IUC group to a second IUC group, the first IUC group is an IUC group currently supported by the CM, and at least one target IUC in the second IUC group is not in the first IUC group;
a first allocation unit 1202, configured to: when the CMTS receives a first upstream bandwidth allocation request sent by the CM, allocate an upstream bandwidth to the CM by using any IUC in the first IUC group, to obtain a first result, and allocate an upstream bandwidth to the CM by using the target IUC, to obtain a second result;
a second sending unit 1203, configured to send the first result and the second result to the CM; and
a second allocation unit 1204, configured to: when the CMTS receives a second upstream bandwidth allocation request sent by the CM, allocate an upstream bandwidth to the CM by using any IUC in the second IUC group.

It should be understood that, a procedure performed by the modules in the CMTS corresponding to FIG. 12 is similar to the method procedure described in the embodiment shown in FIG. 6. Details are not described herein.

In this embodiment of this application, when the CMTS determines that the CM needs to switch an upstream IUC group, the first sending unit 1201 sends a DBC request to the CM. After the first sending unit 1201 sends the DBC request, the first allocation unit 1202 allocates two bandwidths (namely, the first result and the second result) by using any IUC in an old IUC group and a target IUC (namely, an IUC included in a new IUC group but not included in the old IUC group) in the new IUC group. After a period of time, the second allocation unit 1204 allocates a bandwidth to the CM by using an IUC in the new IUC group. In this embodiment, in a process in which the CM changes the IUC group, the CMTS may allocate bandwidths to the CM by using an IUC in the old IUC group and an IUC in the new IUC group. In this case, regardless of whether the switching is completed, the CM can send upstream data. This avoids a packet loss in the process in which the CM changes the IUCs, and improves user experience.

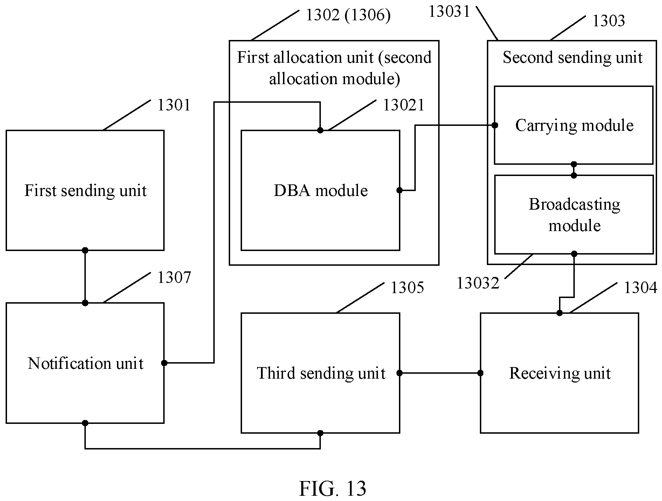

For ease of understanding, the following describes the another CMTS in the embodiments of this application in detail. Referring to FIG. 13, a CMTS in another embodiment of this application includes:
a first sending unit 1301, configured to send a dynamic bonding change DBC request to a cable modem CM, where the DBC request is used to request the CM to change an interval usage code IUC group corresponding to an upstream channel from a first IUC group to a second IUC group, the first IUC group is an IUC group currently supported by the CM, and at least one target IUC in the second IUC group is not in the first IUC group;
a first allocation unit 1302, configured to: when the CMTS receives a first upstream bandwidth allocation request sent by the CM, allocate an upstream bandwidth to the CM by using any IUC in the first IUC group, to obtain a first result, and allocate an upstream bandwidth to the CM by using the target IUC, to obtain a second result;
a second sending unit 1303, configured to send the first result and the second result to the CM; and
a receiving unit 1304, configured to receive a DBC response corresponding to the DBC request;
a third sending unit 1305, configured to send a DBC acknowledgment message to the CM, where the DBC acknowledgment message is used to notify the CM that the CMTS already receives the DBC response; and a second allocation unit 1306, configured to: when the CMTS receives a second upstream bandwidth allocation request sent by the CM, allocate an upstream bandwidth to the CM by using any IUC in the second IUC group.

Optionally, in this embodiment, the CMTS may further include a notification unit 1307. The second allocation unit 1306 is the first allocation unit 1302, and the first allocation unit 1302 (the second allocation unit) includes a DBA module 13021.

The notification unit 1307 is configured to: after the first sending unit 1301 sends the DBC request, instruct the DBA module 13021 to allocate bandwidths to the CM by using any IUC in the first IUC group and the target IUC; and after the third sending unit 1305 sends the DBC acknowledgment message, instruct the DBA module 13021 to allocate a bandwidth to the CM by using any IUC in the second IUC group. Optionally, in this embodiment, the second sending unit 1303 may further include:
a carrying module 13031, configured to: add, to a first upstream bandwidth allocation mapping message, an information element IE corresponding to the first result, and add, to a second upstream bandwidth allocation mapping message, an IE corresponding to the second result; and
a broadcasting module 13032, configured to broadcast the first upstream bandwidth allocation mapping message and the second upstream bandwidth allocation mapping message to the CM.

It should be understood that, a procedure performed by the modules in the CMTS corresponding to FIG. 13 is similar to the method procedure described in the embodiment shown in FIG. 7. Details are not described herein.

In this embodiment of this application, when the CMTS determines that the CM needs to switch an upstream IUC group, the first sending unit 1301 sends the DBC request to the CM. After the first sending unit 1301 sends the DBC request, the first allocation unit 1302 allocates two bandwidths (namely, the first result and the second result) by using any IUC in an old IUC group and a target IUC (namely, an IUC included in a new IUC group but not included in the old IUC group) in the new IUC group. After a period of time, the second allocation unit 1306 allocates a bandwidth to the CM by using an IUC in the new IUC group. In this embodiment, in a process in which the CM changes the IUC group, the CMTS may allocate bandwidths to the CM by using an IUC in the old IUC group and an IUC in the new IUC group. In this case, regardless of whether the switching is completed, the CM can send upstream data. This avoids a packet loss in the process in which the CM changes the IUCs, and improves user experience.

In addition, in this embodiment of the present invention, after sending a DBC acknowledgment message to the CM, the CMTS does not allocate a bandwidth by using an IUC in the old IUC group, but allocates a bandwidth by using only an IUC in the new IUC group. Therefore, after the CM completes IUC group switching, the CMTS does not allocate a bandwidth by using an IUC in the old IUC group, but allocates a bandwidth by using only an IUC in the new IUC group. This ensures that a packet loss does not occur in the process in which the CM changes the IUC group, and improves user experience.

An embodiment of this application further provides a computer storage medium. The computer storage medium is used to store a computer software instruction used by the CMTS, and the computer software instruction includes a program designed for execution of the CMTS.

An embodiment of this application further provides a computer program product. The computer program product includes a computer software instruction, and the computer software instruction may be loaded by a processor to implement a procedure of the data processing method in any one of FIG. 2 to FIG. 9.

All or some of the foregoing embodiments may be implemented by software, hardware, firmware, or any combination thereof. When software is used to implement the embodiments, the embodiments may be all or partially implemented in a form of a computer program product.

The computer program product includes one or more computer instructions. When the computer instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (English full name: Read-Only Memory, ROM for short), a random access memory (English full name: Random Access Memory, RAM for short), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A data processing method, comprising:
sending, by a cable modem termination system CMTS, a dynamic bonding change DBC request to a cable modem CM, wherein the DBC request is used to request the CM to change a modulation profile group corresponding to the downstream channel from a first profile group to a second profile group, the first profile group is a profile group currently supported by the CM, and at least one target profile in the second profile group is not in the first profile group;
sending, by the CMTS, a first downstream data packet to the CM by using any profile in the first profile group, and sending a second downstream data packet to the CM by using the target profile, wherein the first downstream data packet is the same as the second downstream data packet; and
sending, by the CMTS, a third downstream data packet to the CM by using any profile in the second profile group.

2. The method according to claim 1, wherein before the sending, by the CMTS, a third downstream data packet to the CM by using any profile in a new profile group and after the sending, by the CMTS, a first downstream data packet to the CM by using any profile in the first profile group, and sending a second downstream data packet to the CM by using the target profile, the method comprises:
receiving, by the CMTS, a DBC response corresponding to the DBC request; and
sending, by the CMTS, a DBC acknowledgment message to the CM, wherein the DBC acknowledgment message is used to notify the CM that the CMTS already receives the DBC response.

3. The method according to claim 1 or 2, wherein the sending, by the CMTS, a first downstream data packet to the CM by using any profile in the first profile group, and sending a second downstream data packet to the CM by using the target profile comprises:
obtaining, by the CMTS, a first data packet;
replicating, by the CMTS, the first data packet to obtain a second data packet; and
modulating, by the CMTS, the first data packet by using a modulation scheme corresponding to the any profile in the first profile group, to obtain the first downstream data packet, and modulating the second data packet by using a modulation scheme corresponding to the target profile, to obtain the second downstream data packet; and
sending, by the CMTS, the first downstream data packet and the second downstream data packet over the downstream channel.

4. A data processing method, comprising:
sending, by a cable modem termination system CMTS, a dynamic bonding change DBC request to a cable modem CM, wherein the DBC request is used to request the CM to change an interval usage code IUC group corresponding to an upstream channel from a first IUC group to a second IUC group, the first IUC group is an IUC group currently supported by the CM, and at least one target IUC in the second IUC group is not in the first IUC group;
when the CMTS receives a first upstream bandwidth allocation request sent by the CM, allocating, by the CMTS, an upstream bandwidth to the CM by using any IUC in the first IUC group, to obtain a first result, and allocating an upstream bandwidth to the CM by using the target IUC, to obtain a second result;
sending, by the CMTS, the first result and the second result to the CM; and
when the CMTS receives a second upstream bandwidth allocation request sent by the CM, allocating, by the CMTS, an upstream bandwidth to the CM by using any IUC in the second IUC group.

5. The method according to claim 4, wherein before the allocating, by the CMTS, an upstream bandwidth to the CM by using any IUC in the second IUC group and after the sending, by the CMTS, the first result and the second result to the CM, the method comprises:
receiving, by the CMTS, a DBC response corresponding to the DBC request; and
sending, by the CMTS, a DBC acknowledgment message to the CM, wherein the DBC acknowledgment message is used to notify the CM that the CMTS already receives the DBC response.

6. The method according to claim 4 or 5, wherein the sending, by the CMTS, the first result and the second result to the CM comprises:
adding, by the CMTS to a first upstream bandwidth allocation mapping message, an information element IE corresponding to the first result, and adding, to a second upstream bandwidth allocation mapping message, an IE corresponding to the second result; and
broadcasting, by the CMTS, the first upstream bandwidth allocation mapping message and the second upstream bandwidth allocation mapping message to the CM.

7. A CMTS, comprising:
a first sending unit, configured to send a dynamic bonding change DBC request to a cable modem CM, wherein the DBC request is used to request the CM to change a modulation profile group corresponding to the downstream channel from a first profile group to a second profile group, the first profile group is a profile group currently supported by the CM, and at least one target profile in the second profile group is not in the first profile group;
a second sending unit, configured to: send a first downstream data packet to the CM by using any profile in the first profile group, and send a second downstream data packet to the CM by using the target profile, wherein the first downstream data packet is the same as the second downstream data packet; and
a third sending unit, configured to send a third downstream data packet to the CM by using any profile in the second profile group.

8. The CMTS according to claim 7, wherein the CMTS further comprises:
a receiving unit, configured to receive a DBC response corresponding to the DBC request; and
a fourth sending unit, configured to send a DBC acknowledgment message to the CM, wherein the DBC acknowledgment message is used to notify the CM that the CMTS already receives the DBC response.

9. The CMTS according to claim 7 or 8, wherein the second sending unit comprises a media access control MAC module and a physical layer PHY module, wherein
the MAC module is configured to: obtain a first data packet, and replicate the first data packet to obtain a second data packet;
the MAC module is configured to: packetize the first data packet to obtain a first data frame, and packetize the second data packet to obtain a second data frame;
the MAC module is configured to send the first data frame and the second data frame to the PHY module;
the PHY module is configured to: modulate the first data packet by using a modulation scheme corresponding to the any profile in the first profile group, to obtain the first downstream data packet, and modulate the second data packet by using a modulation scheme corresponding to the target profile, to obtain the second downstream data packet; and
the PHY module is configured to send the first downstream data packet and the second downstream data packet over the downstream channel.

10. A CMTS, comprising:
a first sending unit, configured to send a dynamic bonding change DBC request to a cable modem CM, wherein the DBC request is used to request the CM to change an interval usage code IUC group corresponding to an upstream channel from a first IUC group to a second IUC group, the first IUC group is an IUC group currently supported by the CM, and at least one target IUC in the second IUC group is not in the first IUC group;
a first allocation unit, configured to: when the CMTS receives a first upstream bandwidth allocation request sent by the CM, allocate an upstream bandwidth to the CM by using any IUC in the first IUC group, to obtain a first result, and allocate an upstream bandwidth to the CM by using the target IUC, to obtain a second result;
a second sending unit, configured to send the first result and the second result to the CM; and
a second allocation unit, configured to: when the CMTS receives a second upstream bandwidth allocation request sent by the CM, allocate an upstream bandwidth to the CM by using any IUC in the second IUC group.

11. The CMTS according to claim 10, wherein the CMTS further comprises:
a receiving unit, configured to receive a DBC response corresponding to the DBC request; and
a third sending unit, configured to send a DBC acknowledgment message to the CM, wherein the DBC acknowledgment message is used to notify the CM that the CMTS already receives the DBC response.

12. The CMTS according to claim 11, wherein the CMTS further comprises a notification unit, the second allocation unit is the first allocation unit, and the first allocation unit comprises a dynamic bandwidth allocation DBA module; wherein
the notification unit is configured to: after the first sending unit sends the DBC request, instruct the DBA module to allocate bandwidths to the CM by using any IUC in the first IUC group and the target IUC; and
the notification unit is configured to: after the third sending unit sends the DBC acknowledgment message, instruct the DBA module to allocate a bandwidth to the CM by using any IUC in the second IUC group.

13. The CMTS according to any one of claims 10 to 12, wherein the second sending unit comprises:
a carrying module, configured to: add, to a first upstream bandwidth allocation mapping message, an information element IE corresponding to the first result, and add, to a second upstream bandwidth allocation mapping message, an IE corresponding to the second result; and
a broadcasting module, configured to broadcast the first upstream bandwidth allocation mapping message and the second upstream bandwidth allocation mapping message to the CM.

14. A computer-readable storage medium, comprising an instruction, wherein when the instruction is run on a computer, the computer is enabled to perform the method according to any one of claims 1 to 6.

15. A computer program product comprising an instruction, wherein when the computer program product runs on a computer, the computer is enabled to perform the method according to any one of claims 1 to 6.
